# EUROPEAN PATENT SPECIFICATION

(11) **EP 2 633 647 B1**
(45) Date of publication and mention of the grant of the patent: **01.05.2019**
(21) Application number: 10859035.7
(22) Date of filing: 27.10.2010
(51) Int. Cl.: H04L 12/28, H04L 29/06, H04L 29/08

(54) **AUTHORIZING AN ELECTRONIC DEVICE TO CONTROL A MEDIA RENDERING UNIT**
AUTORISIERUNG EINER ELEKTRONISCHEN VORRICHTUNG ZUR STEUERUNG EINER MEDIENDARSTELLUNGSEINHEIT
AUTORISER UN DISPOSITIF ÉLECTRONIQUE À COMMANDER UNE UNITÉ DE RENDU MULTIMÉDIA

(43) Date of publication of application: 04.09.2013
(73) Proprietor: Telefonaktiebolaget LM Ericsson (publ), 164 83 Stockholm (SE)
(72) Inventor: ZALOSHNJA, Farjola, S-169 70 Solna (SE); ERMIS, Olof, S-11847 Stockholm (SE); WOXBLOM, Mikael, S-12542 Älvsjö (SE)
(74) Representative: Zacco Sweden AB
(86) International application number: PCT/SE2010/051159
(87) International publication number: WO 2012/057661

(56) References cited:
- WO-A1-2009/121409
- US-A1- 2009 248 702
- US-A1- 2010 095 332
- US-A1- 2010 095 332

## Description

### TECHNICAL FIELD

The invention generally relates to methods for a media aggregating node, for a first electronic device, and for a second electronic device, for authorizing the second electronic device to control a media rendering unit included in a local network environment. The invention also relates to a media aggregating node, a first electronic device, and to a second electronic device.

### BACKGROUND

The demand for interoperability between devices in local network environments, such as home and office environments, is steadily increasing. The aim of interoperability is to facilitate media and content sharing, and to enable communication between different devices within a local network. One example of standardized interoperability between devices in the home environment is the Digital Living Network Alliance (DLNA). DLNA is a standard defined by an industry consortium aiming to allow entertainment devices within the home to share their content with each other across a home network, without requiring a complicated configuration process. DLNA intends to alleviate the problems otherwise inherent in sharing digital media between different consumer electronic devices. For example, a DLNA compliant TV set will be able to interact with a DLNA compliant PC to play out music, photos or videos stored on the PC (Personal Computer). Furhtermore, DLNA-compatible devices are able to communicate with each other using the Unverisal Plug and Play (UPnP), which is a network protocol that is capable of establishing communication between DLNA-compatible devices within a DLNA network, without requiring any configuration process.

A drawback with DLNA is that its user-friendly set-up mechanism entails insufficient security, due to the lack of a regular authentification mechanism.

Further, even though the amount of media content that is available on-demand, e.g, on the internet is increasing, the media exchange in a DLNA network is limited to the local devices within the network and to pre-stored media in those devices. Thus access to the internet, as well as to other external networks, is limited within a DLNA network, and any external network-media has to be downloaded and stored locally on, e. g., a NAS (Network Attached Storage) or PC, in order to be accessible on a DLNA compatible TV or radio receiver within the DLNA network. At the same time, the internet is growing into being a well-established source of media and content, with a wide range of content, media and related services readily available. Content providers are increasingly using the internet as a means to sell and distribute media and content.

Furhtermore, a DLNA network may include a wide variety of consumer electronic devices, each having its dedicated and customized user-interface and user-device interaction means, each allowing interaction by means a dedicated remote control. It is not very convenient to handle a multitude of remote-controls to interact with the different consumer electronic devices in a living room environment. Users do not appreciate having to operate and keep track of their numerous remote-controls and they find it difficulty to know which remote control is dedicated to which consumer electronic device. Handling a multitude of remote controls becomes even more cumbersome and complex with increased interoperability between consumer electronic devices, e.g., through media and file sharing. Furthermore, there is an unwillingness among end-users to adapt to new devices and user-interfaces. Instead they tend to stick to familiar devices that they are accustomed to.

From a device unit in a DLNA network environment, a user can search for, and access, content and media readily available on other devices and servers connected to the home network. However, since there is no authentification mechanism established in DLNA it is also difficult to define who is actually authorized to controll a DLNA device. Sharing access to DLNA devices with family and friends, or with a social network community outside of the local DLNA/UPnP network is not possible with the current DLNA/UPnP specifications.

Thus, it is still a problem to enable a user to access and handle external network media, e.g. internet media, on devices in a local network environment e.g. in a DLNA network, and share the handling of external media with other users. Related art within this technical field is disclosed e.g. US 2010/095332, which describes how to enable a user to control media rendering from multiple servers and multiple storages in a home network, by using a mobile device.

### SUMMARY

It is an object of the invention to basically address at least some of the problems outlined above. These objects and others may be obtained by providing methods and arrangements according to the independent claims attached below.

According to a first aspect, a method is provided for a media aggregating node for authorizing a second electronic device to control a media rendering unit included in a local network environment. The media aggregating node is connected to a local network environment, e.g. a DLNA network, comprising a gateway, which is the communication interface between the media aggregating node and the media rendering units such as e.g. TVs, Computers, Audio players, Domestic appliances etc comprised in the local network environment. The media aggregating node is further connected to first electronic device, which is operated by a first user and controls a media rendering unit, in the local network environment, and the media rendering upon it. The media aggregating node is further connected to a second electronic device or to a set of second electronic devices, which can be associated with a second user. The media aggregating node receives presence information regarding media rendering units from the local network environment (e.g. via the gateway) and forwards the presence information to the first electronic device. In response, the media aggregating node receives a user selection of a media rendering unit from the first electronic device. Further, the media aggregating node receives an instruction, from the first electronic device to authorize a second electronic device to control the media rendering unit. Thereafter, the media aggregating node authorizes the second electronic device to control the media rendering unit. After being authorized by the media aggregating node, the second electronic device can control the media rendering unit and the media rendering upon it.

According to a second aspect, a method is provided for a first electronic device to authorize a second electronic device or a set of second electronic devices, which can be associated with a second user, to control a media rendering unit controlled by the first electronic device. The first electronic device is connected to a media aggregating node that is connected to the second electronic device, and the media aggregating node is further connected to a local network environment e.g. a DLNA network, via a gateway, and the local network includes media rendering units. The first electronic device receives presence information from the media aggregating node regarding the media rendering units and, in response, the first electronic device registers a user selection of a media rendering unit. The user selection indicates the media rendering unit to control, e.g. selecting which media item to render on the media rendering unit. Information about the user selection of the media rendering unit is sent to the media aggregating node. The first electronic device may receive presence information regarding second electronic devices, which can be authorized by the first electronic device to control a media rendering unit, and, in response, the first electronic device may register a user selection of a second device or devices. Thereafter, the first electronic device sends instructions to the media aggregating node to authorize the second electronic device or the set of second electronic devices to control the selected media rendering unit.

According to a third aspect, a method is provided for a second electronic device to be authorized by first electronic device to control a media rendering unit, included in a local network environment, and controlled by the first electronic device. The second electronic device may be a part of a set of second electronic devices, which can be associated to a second user. The second electronic device is connected to a media aggregating node that is connected to the first electronic device and to the local network environment, via a gateway. The local network can be e.g. a DLNA network, and includes one or several media rendering units. The second electronic device logs in on the media aggregating node by sending user login information to the media aggregating node. Thereafter, the second electronic device sends presence information regarding e.g. status and capabilities to the media aggregating node, such that the media aggregating node can authorize the second electronic device to control a media rendering unit upon receiving instruction from the first electronic device to do so. When the media aggregating node receives instructions to authorize the second electronic device to control the media rendering unit it authorizes the second electronic device to control the media rendering unit. Finally, the second electronic device receives authorization from the media aggregating node to control the media rendering unit.

According to a fourth aspect, a media aggregating node is provided that is arranged to authorize the at least one second electronic device to control a media rendering unit, and the media rendering upon it, controlled by a first electronic device. The media aggregating node is connectable to a local network environment, e.g. a DLNA network, and to a first electronic device and to a set of second electronic devices including at least one second electronic device. The local network environment includes one or several media rendering unit. The media aggregating node includes a communication unit that is configured to send presence information regarding media rendering units in the local network environment to the first electronic device and, in response, receive a user-selection of a media rendering unit from the first electronic device. Furthermore, the communication unit is configured to receive an instruction, from the first electronic device, to authorize at least one second electronic device to control the media rendering unit. The media aggregating node further includes an authorizing unit configured to authorize second electronic devices to control the media rendering unit.

According to a fifth aspect, a first electronic device is provided that is arranged to send instructions authorize the second electronic devices to control a media rendering unit, and the media rendering upon it, controlled by the first electronic device. The first electronic device is connectable to a media aggregating node and the media aggregating node, in turn, is connectable to a local network environment including one or several media rendering units, and to one or more second electronic devices. The first electronic device includes a communication unit configured to receive presence information regarding the media rendering unit from the media aggregating node, and to send instructions to the media aggregating node to authorize one or more second electronic devices to control the media rendering unit. The first electronic device further includes a user input unit that is configured to register a user command indicating that one or more second electronic devices are selected to be authorized to control the media rendering unit.

According to a sixth aspect, a second electronic device is provided that is arranged to be authorized to control a media rendering unit, and the media rendering upon it, controlled by the first electronic device. The second electronic device is connectable to a media aggregating node and the media aggregating node, in turn, is connectable to a local network environment including one or several media rendering units, and to the first electronic device. The second electronic device includes a communication unit configured to send presence information to the media aggregating node, such that the first electronic device is able to authorize the second electronic device to control a media rendering unit. The communication unit is further configured to send user commands associated with controlling the media rendering unit and the media rendering upon it to the media aggregating node. The second electronic device further includes a user input unit that is configured to register user commands associated with controlling the media rendering unit and the media rendering upon it.

An advantage with the present invention is that the first electronic device is able to authorize a second electronic device to control a media rendering unit. Hence, the user of the first electronic device can share the control of a media rendering unit with a second user, e.g. a friend. The second user can control media rendering upon a media rendering unit from the second electronic device which he is already familiar with.

Further possible features and benefits of the invention will become apparent from the detailed description below.

### BRIEF DESCRIPTION OF THE DRAWINGS

For a better understanding of the embodiments described below, and to show more clearly how it may be carried into effect, reference will now be made, by way of illustration only, to the following drawings in which:
Figure 1 is a block diagram schematically illustrating various nodes that can be used;
Figure 2 schematically illustrates a first electronic device, a second electronic device, a media aggregating node and exemplary media rendering units;
Figure 3 is a block diagram schematically illustrating a social network node and other nodes that can be used, according to some exemplary embodiment of the invention;
Figure 4 is a signaling diagram illustrating an example of how the signaling between different nodes may be done in practice;
Figure 5 is a flow chart showing an exemplary procedure in a media aggregating node for authorizing a second electronic device to control media rendering unit controlled by a first electronic device;
Figure 6 is a flow diagram illustrating an example of how a list of electronic devices or sets of electronic devices that can be authorized to control a media rendering unit may be retrieved from a social network node.
Figure 7 is a block diagram schematically illustrating an exemplary media aggregating node;
Figure 8 is a flow chart showing an exemplary procedure in a first electronic device for authorizing a second electronic device to control a media rendering unit;
Figure 9 is a flow chart showing an exemplary procedure in a second electronic device when being authorized by a first electronic device to control a media rendering unit;
Figure 10 is a block diagram schematically illustrating an exemplary electronic device;
Figure 11 is a view of an exemplary electronic device.

### DETAILED DESCRIPTION

Briefly described, the embodiments below can be used for enabling a first electronic device to authorize a second electronic device to control a media rendering unit comprised in a local network environment.

In the following description, some optional embodiments of the invention will be described with reference to the accompanying drawings. For purpose of explanation and not limitation, specific details are set forth, such as particular scenarios, techniques, etc., in order to provide a thorough understanding of the embodiments. However, it should be noted that the invention is not limited to theses examples but may be practiced in other embodiments as compared to the details outlined below.

Moreover, those skilled in the art will appreciate that the functions and means explained herein may be implemented at least partly by using software functioning in conjunction with a programmed microprocessor or a general purpose computer, and/or using an application specific integrated circuit (ASIC). It will also be appreciated that while the embodiments are primarily described in the form of methods and devices, the embodiments may also be realized in a computer program product as well as in a system comprising a computer processor and a memory coupled to the processor, wherein the memory is encoded with one or more programs that may perform the functions disclosed herein.

UPnP (Universal Plug-and-Play) is an architecture developed in the multivendor collaboration UPnP Forum, for establishing standardized device protocols for communication in a local network, e.g. a DLNA network, between different devices that may use different access technologies, operating systems, programming languages, format standards and communication protocols. UPnP also supports the process called 'discovery' in which a device can enter a local network, obtain a local IP address, announce its name and IP address, and exchange capabilities and services with other devices within the network.

DLNA (Digital Living Network Alliance) is a standard that defines acquisition, storing and accessing digital media content from devices in a local network. The UPnP protocol is utilized by DLNA as an underlying protocol for communication between DLNA devices within local networks. In this context, the local network often refers to a DLNA network. It is required that DLNA devices support HTTP (Hyper Text Transport Protocol) as a basic transport mechanism for transfer of media across the local network. In addition, RTP (Real Time Protocol) can optionally be used as a media transport, but typically the mandatory requirements for HTTP must always be supported by the device.

In the following, the term media rendering unit is used to represent a device that is capable of rendering or playing out media, and of operating in a local network and communicating with other devices in the local network, e.g. a DLNA network. The term external network should be understood as a communication network outside the local network, and the term electronic device is used to represent a device that is capable of communicating with this external network. The media aggregating node is basically a media aggregator that publishes and handles media items from external network media providers. The media aggregating node further controls the media rendering on the media rendering units. According to one example embodiment, the external network corresponds to the internet, the local network corresponds to a DLNA network, and the electronic device refers to an internet connected mobile phone, but this invention is not limited thereto.

Conventionally, a DLNA network comprises one or more DMS (Digitial Media Storage/Server) for storing media content, and the available media content can be presented to a user on a DMC (Digital Media Controller), typically arranged in the form of tree structure. Media content stored on the DMS, such as video- or audio-media or an image, is available and can be played or rendered by the user on a DMP (Digital Media Player) or on a DMR (Digital Media Renderer). The DLNA network communicates with an external network via a gateway. The DMS and the DMC may be implemented in the Gateway.

According to embodiments described hereinafter, an electronic device, such as internet-connected mobile phone, is used to select a media rendering unit and the media content hosted on said external network, via a media aggregating node, and to push the external network media directly to a media rendering unit, which may be a DLNA compatible TV, PC or audio-player. The media aggregating node may comprise one or more media servers, e.g. configured for authenticating users logged on to the electronic device. The electronic device can communicate with the media aggregating node, which, in turn, can communicate with the local network environment, e.g. through a gateway of the local network environment. Thereby, the electronic device is able to function as a custom-optimized navigation client, without the restrictions imposed e.g. by the DLNA/UPnP architecture. Further, the external network-media can be streamed on-demand to the media rendering units, and does not have to be downloaded locally on the DMS prior to playing.

In an exemplary use-case according to one possible embodiment in which the local network is a DLNA network, and the external network is the internet, a user is logged on to an internet connected electronic device, e.g. his mobile phone. This user will be referred to as a first user and the electronic device as a first electronic device. The first electronic device is further connected to a media aggregating node. The first electronic device receives a list of available media rendering units in the DLNA network from the media aggregating node. The list is obtained by the gateway, and forwarded to the user via the media aggregating node. The list may also comprise information about the media rendering units, e.g. playback capabilities. The DLNA network may be implemented in the first user's own home environment, and includes various DLNA compatible media rendering units (TV, DVD/BD players, Game console, Printer, Portable audio player etc). The list is presented to the first user by appearing on the display unit of the first electronic device. The first user selects a media rendering unit in the list for rendering media, e.g. by a user input command registered by a touch-screen unit included in the first electronic device. The first user can choose to render media on the selected media rendering unit, or according to the exemplary use-case, he can select to share the control of the selected media rendering unit with a friend, acquaintance, colleague, guest or other user. The other user will hereafter be referred to as a second user, and a set of electronic devices associated with the second user will be referred to as second electronic devices, which may e.g. be the second users' mobile phone, his PDA, his laptop etc. The first user may thus authorize the second user to control media rendering on the selected media rendering unit from any one of the second electronic devices. In this way, the second user can control the media rendering unit and the media rendering upon it using his own device. E.g. if the selected media rendering unit is a TV then the second user may select which movies to render on the TV, and further, the second user is able to fast-forward, rewind, stop and resume playing a media item and to adjust TV settings such as audio settings (e.g. volume and balance) and image settings (e.g. contrast and brightness) by sending further control commands from one of the second electronic devices to the media aggregating node. For example, the first user may select the second user among his friends-list on a social networking web-site, such as Facebook, LinkedIn, MySpace or other. The media aggregating node retrieves the friend list from the social network, or the media aggregating node may interface with the list through a set of APIs (Application Programming Interface), or the first user may select a second user logged on to the media aggregating node, or the friend list may be maintained in the media aggregating node. Furthermore, the friends-list may also comprise individual devices associated with the friends. Thus, the first user may select a second user and all or some of the second electronic devices associated with the second user. When the first user has selected a second user or any associated second electronic device(s), he sends from the first electronic device an instruction to the media aggregating node to authorize the second user or second electronic device(s) to control the media rendering unit. The media aggregating node authorizes the second user or second electronic device(s) to control the media rendering unit. The second user can thereafter, when logged on a second electronic device, control the media rendering unit in order to render media. The second user can, using the second electronic device, e.g. send a request to the media aggregating node for information regarding available media. In response, the second user receives from the media aggregating node information regarding media items from preselected internet media content providers, the media items can e.g. be music, movies or popular TV shows, games. The information from the media aggregating node may further comprise a short description, thumbnails and additional metadata related to the media items. The second user then selects a media item to render on the media rendering unit. The user selection is sent to the media aggregating node, which in turns forward the user selection to the gateway. The first user may further limit the authorization by authorizing only limited control of media rendering unit to the second user or device(s). For example, the second user or device(s) may be authorized to select a movie to render but not to adjust TV settings, or vice versa.

Thus, the solution as described herein can be implemented by involving a media aggregating node, electronic devices, optionally a gateway and at least one media rendering unit, as described below:
A media aggregating node, e.g. a media aggregator, may comprise media servers that in some embodiments are responsible for authenticating users, for processing all requests and presence messages referred to below, for storing data and making user profile available and for handling media and device metadata to be displayed on an electronic device. The media aggregating node may be able to communicate with electronic devices, with media rendering units in the local network environment (e.g. via a gateway), with social network nodes and with media content providers via a content data sub-node. The media aggregating node is able to receive user selections and control commands regarding media rendering on media rendering units from a electronic devices, these instructions may be forwarded to the gateway so they can be executed. The media aggregating node is also able to receive an instruction from a first electronic device to authorize a second electronic device, or a set of second electronic devices, that may be associated to a second user, to control a media rendering unit or several media rendering units in the local network environment.

An electronic device, e. g., a mobile phone, a personal digital assistant (PDA), or a touch-pad, is able to communicate with an external network e.g. the internet, with a media aggregating node, and, optionally, with a social network node. The electronic device may be capable of displaying media items from content providers published by the media aggregating node and suitable media rendering units included in a local network environment, e.g. a DLNA network, to the user, and thereby enabling the user to select media items and media rendering units, and to send control commands, e.g., to e.g. to start playing the selected media item on the selected media rendering unit. Furthermore, the electronic device may be capable of receiving and displaying lists of electronic devices, and sets of electronic devices associated with other users that can be authorized to control media rendering units.

A media rendering unit, e.g. a TV, a radio, a MP3 player or gaming console, included the local network environment, e.g. a DLNA network, and may be connected to other media rendering units, a gateway, and the DMS in the local network environment. The media rendering unit is able to render media items, e. g. media items from external network content providers published by the media aggregating node. A media rendering unit is e.g. a DMR or a DMP in a DLNA network. Furthermore, a media rendering unit may receive commands associated with media rendering, which may be sent from an electronic device via a media aggregating node and a gateway.

Other nodes that may be involved in the implementation of the described embodiments include:
A gateway located within the local network environment and capable of acting as a communication interface between the local environment and the external network environment. The gateway may communicate presence and control messages between the media rendering units in the local network environment and the media aggregating node.

A content data-node, e.g., owned by the internet media content providers, for publishing the available media titles and their respective URL's (Uniform Resource Locator), by communicating with the media aggregating node.

A streaming server-node for providing media streams to the media rendering units.

A social network node capable of communicating with the media aggregating node and with the electronic devices. The social network node handles and stores, or access list of users, electronic devices or sets of electronic devices that can be authorized to control a media rendering unit, several media rendering units, or all of the media rendering units in the local network environment (e.g. a DLNA network).

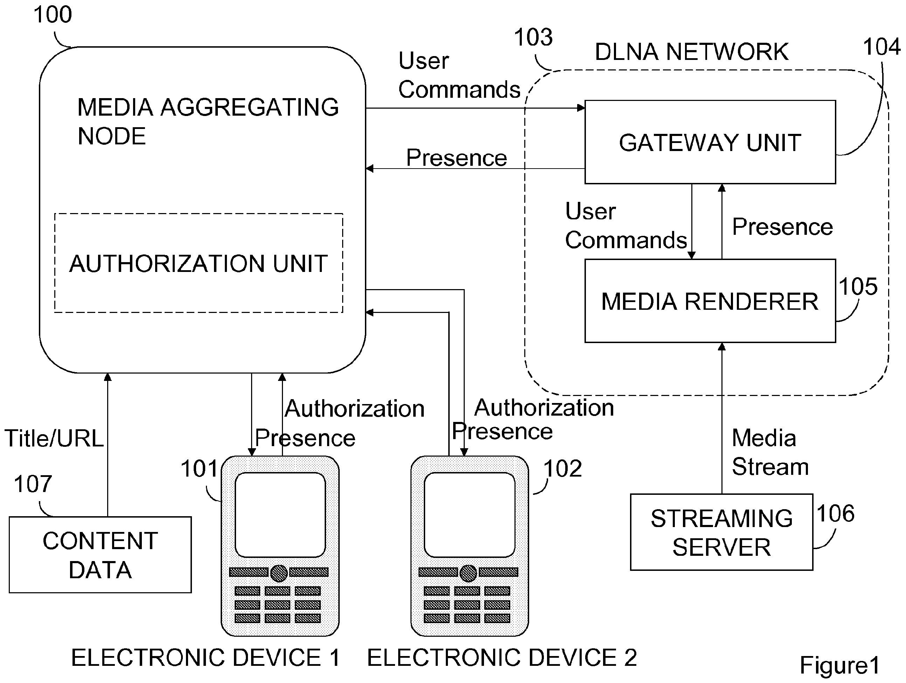

Fig. 1, 2 and 3 show block diagrams schematically illustrating exemplary embodiments of the nodes that can be used. In a exemplary embodiment the local network is a DLNA network. The local network environment includes one or more media rendering units 105, 111, 112, 113 and a gateway. The gateway 104 is communicating with a media aggregating node 100, and the media aggregating node 100 is communicating with a first electronic device 101, onto which a first user is logged. This enables the first electronic device to control internet media items on media rendering units 105, 111, 112, 113 included within the DLNA network. A media stream can be provided to the media rendering units is provided by a streaming server 106. The media aggregating node is further communicating with a content data-node 107 in order to obtain available media titles and their respective URLs.

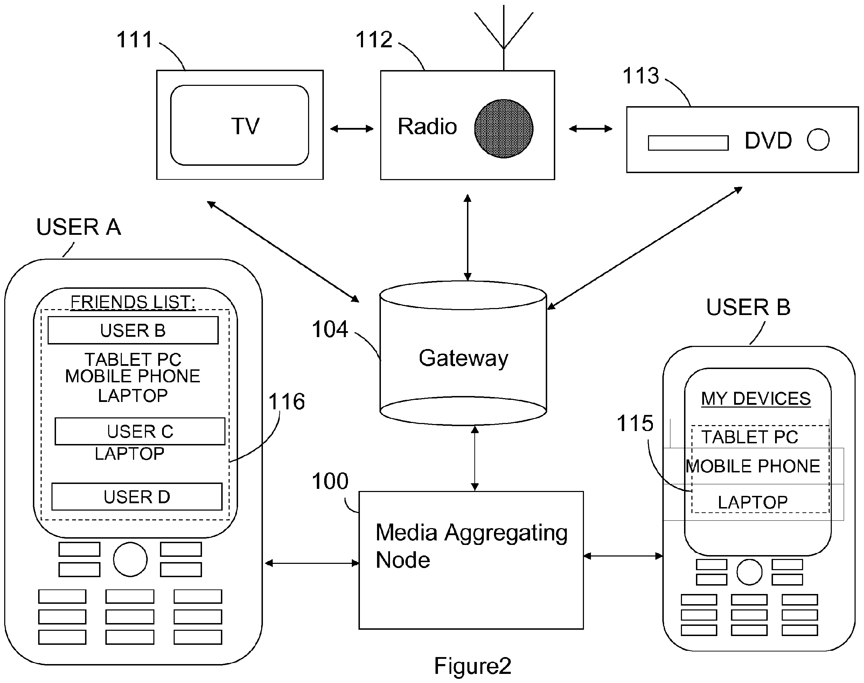

Furthermore, the media aggregating node is connected to a second electronic device 102, on to which a second user is logged in. The first user may authorize the second user to control a media rendering unit 105, 111, 112, 113 by sending an instruction from the first electronic device 101 to authorize the second electronic device to control the media rendering unit. The second electronic device may be included in a list of electronic devices 116 that can be authorized by the first electronic device 101 to control a media rendering unit 105, 111, 1112, 113 in the DLNA network 103. The list of electronic devices 116 is stored in the media aggregating node or it is retrieved by the media aggregating node from a social network node 108. As shown in Fig. 2, the list of electronic devices 116 can be arranged to list the friends of the first user and each friend is associated with a set of electronic devices 115. Further, in Fig. 2 user A access his friends list including user B, user C, and user D using his electronic device. The friends list is displayed on the display unit of user A's electronic device. User B is associated with a set of electronic devices 115 including a mobile phone, a laptop computer, and a tablet computer. User A chooses to authorize user B to control a media rendering unit 105, 111, 112, 113, which according to this exemplary embodiment means that the entire set of electronic devices associated with user B are authorized to control the media. User A may further choose to only authorize individual electronic devices associated with user B, e.g. user A authorizes only user B's mobile phone to control the media rendering unit. Associated devices refers to devices that the user can access, e.g. log in on the device, also by remote log in, and/or that the user has an established relationship with the device (i.e. a notion of trust or ownership relationship and access control).

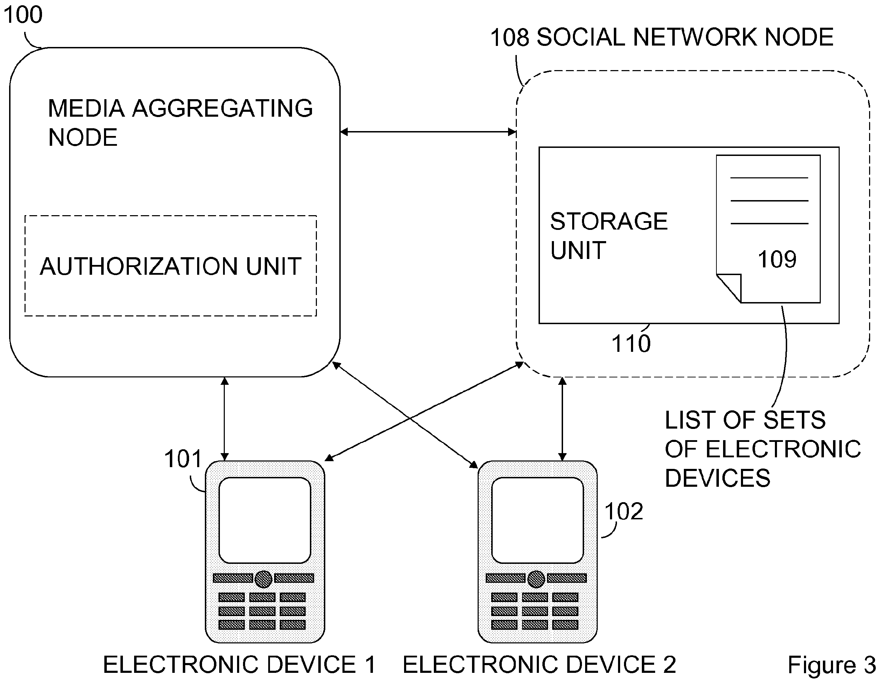

A friends-list is a list of friends e.g. on a social networking node 108 or a friends-list stored in the media aggregating node. For example, user A can invite second users to join the list by sending invitations or second users can send requests from his electronic device to be added to the User A's friends list. Furthermore second users can automatically be added or invited to user A's friends list based on predetermined criteria, e.g. based on location criteria, e.g., when user B physically enter user A's home he is automatically added to user A's friend list. Figure 3 is block diagram showing a media aggregating node 100, a first electronic device 101, a second electronic device 102 and a social network node 108. The social network node comprises a storage unit 110 arranged to store a list of sets of electronic devices 109 that can be authorized by the first electronic 101 device to control a media rendering unit 105. The media aggregating node is connected to the social network node 108, e.g. through a set of APIs so that it can access lists of sets of electronic devices that can be authorized to control a media rendering unit. The first and the second electronic devices 101, 102 are also connected to the social network node. The first electronic device can access list of sets of electronic device. Further, the first electronic device can send invitations to other users and/or electronic devices to be added to the list, or accept or reject requests from other users or electronic devices to add electronic device(s) to the list of sets of electronic devices that can be authorized by the first electronic device to control a media rendering unit. The second electronic device can send a request to the social network node or to the media aggregating node to add the second electronic device or a set of second electronic devices associated with a second user to the list.

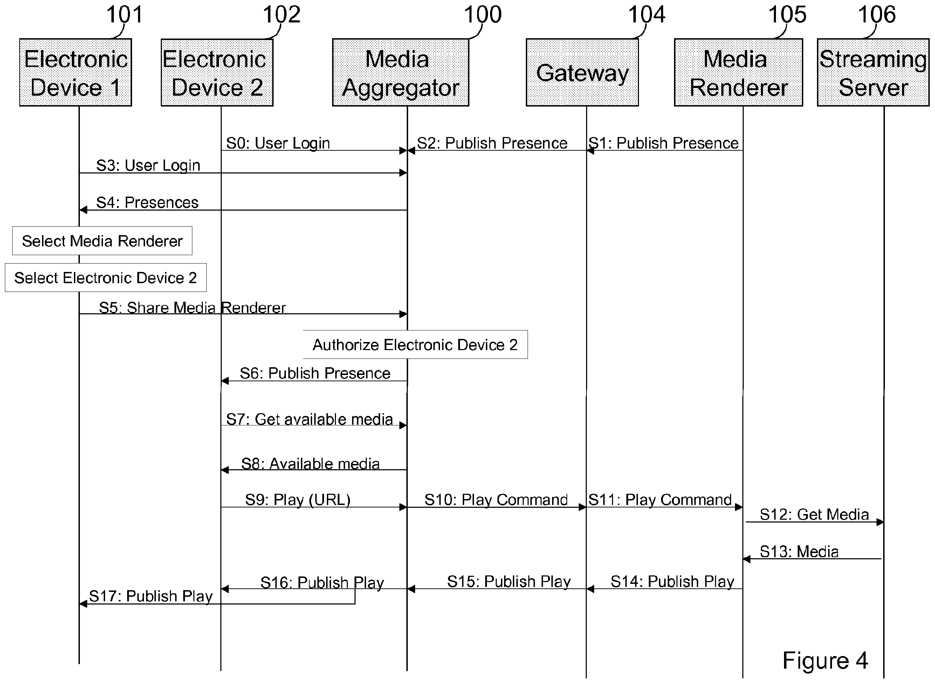

Figure 4 is a signaling diagram illustrating how a first electronic devices 101, that controls media rendering in a media rendering unit 105 in a local network 103, e.g. a DLNA network, comprising a gateway 104, authorizes a second electronic device 102 to control the media rendering unit 105.

The electronic devices 101 and 102 logs in to a media aggregator node 100, S0, S3, by sending login credentials, e.g. user name and password. In S1, the media rendering unit 105 sends or publishes presence, e.g. refer to availability, to the Gateway 104 (this would correspond to a UPnP Publish command in a DLNA network). The Gateway 104, in turn, forwards the presence information to the media aggregating node, S2. The media aggregating node sends the presence information to the first electronic device, S4, and the user of the first electronic device makes a selection of a media rendering unit, and further the user of the first electronic device selects to authorize a at least one second electronic device to control the selected media rendering unit. In, S5 the first electronic device 101 sends information about the user selected media rendering unit 105 and instructions to authorize the second electronic device 102 to control the selected media rendering unit 105. The media aggregating node authorizes the second electronic device 102 to control the media rendering unit 105. In S6, the media aggregating node 100 publishes presence information about the selected media rendering unit 105 to the second electronic device 102. The presence information could also include information about the media rendering unit's device capabilities, e.g. file formats supported by the media rendering unit. Alternatively, the media aggregating node can request device capabilities from the media rendering units via the gateway. The media aggregating node can request the device capabilities from media rendering units when needed, e.g. when a media rendering unit is selected by a user, or when the media rendering unit is added to the DLNA network, e.g. upon switch-on. In S8, the media aggregating node sends information about media items published by the media aggregating node to the second electronic device. Likewise the media aggregating node may send information about media items available on the Gateway (DMS) to the second electronic device. The media aggregating node can send the information either upon a request from the second electronic device, as shown in S7, or send the information to the second electronic device upon when triggered by an event, e.g. when the second electronic device logs in on the media aggregating node or in connection with a location update or device switch-on. Once the second electronic device has received the information about available media items the second user selects a media item that he wishes to render. In, S9 the second electronic device sends information about the selected media item to the media aggregating node. The media aggregating node 100 matches the selected media item with the selected media rendering unit, which may include choosing a correct encoding profile or file format of the selected media items for rendering on the selected media rendering unit 105. After having received a control command from the second electronic device, the media aggregating nodes issues the control command and sends it to the gateway (e.g. to a virtual control node comprised in the gateway), S10. The control command can e.g. be a play (UPnP play), stop or resume playing command. The control command is then forwarded to the selected media rendering unit, S11. In S12 and S13, the media rendering unit obtains the media stream associated with the selected media item from the streaming server, and sends its presence status (issues an UPnP Publish with play status) to the gateway (e.g. to a virtual control node therein). The gateway, in turn, forwards the updated presence to the media aggregating node, S15, which in turns forwards the play presence update to the second electronic device 102, S16 and/or the first electronic device 101, S17.

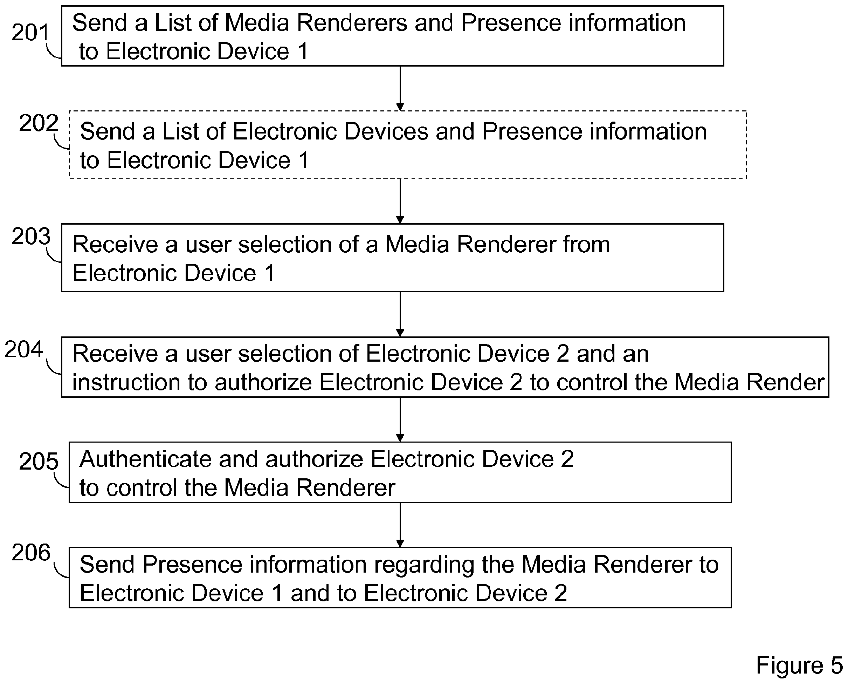

Figure 5 is a flow chart showing a procedure in a media aggregating node when authorizing a second electronic device to control a media rendering unit in a local network environment, according to an exemplary embodiment, by communicating with a gateway of the local network environment, and with a first electronic device that is controlling the media rendering unit from outside the local network environment, and with a second electronic device.

First, the media aggregating node may receive presence information regarding media rendering units included in the local network environment from the gateway. Thereafter, in step 201 the media aggregating then sends the presence information to the first electronic device. The media aggregating node may store a list of sets of electronic device, where each set of electronic devices is associated with a user, or the media aggregating node can receive the list from a social network node. The list of sets of electronic devices comprises sets of electronic devices that can be authorized by the first electronic device to control a media rendering unit. In step 202 the media aggregating node sends the list to the first electronic device. In steps 203 and 204 the media aggregating node receives, from the first electronic device, a user selection of a media rendering unit and an instruction to authorize a second user and/or a set of second electronic devices associated with the second user to control the media rendering unit. In step 205 the media aggregating node authorizes the second user and/or a set of second electronic devices associated with the second user to control the media rendering unit. Once the second user and/or a set of second electronic devices associated with the second user has been authorized to control the media rendering unit it can be controlled using a second electronic device. The media aggregating node receives presence information regarding the media rendering unit, e.g. if it is rendering a media item (UPnP Publish play), from the gateway and forwards that information to the first electronic device and/or to the second electronic device (set of second electronic devices), in step 206.

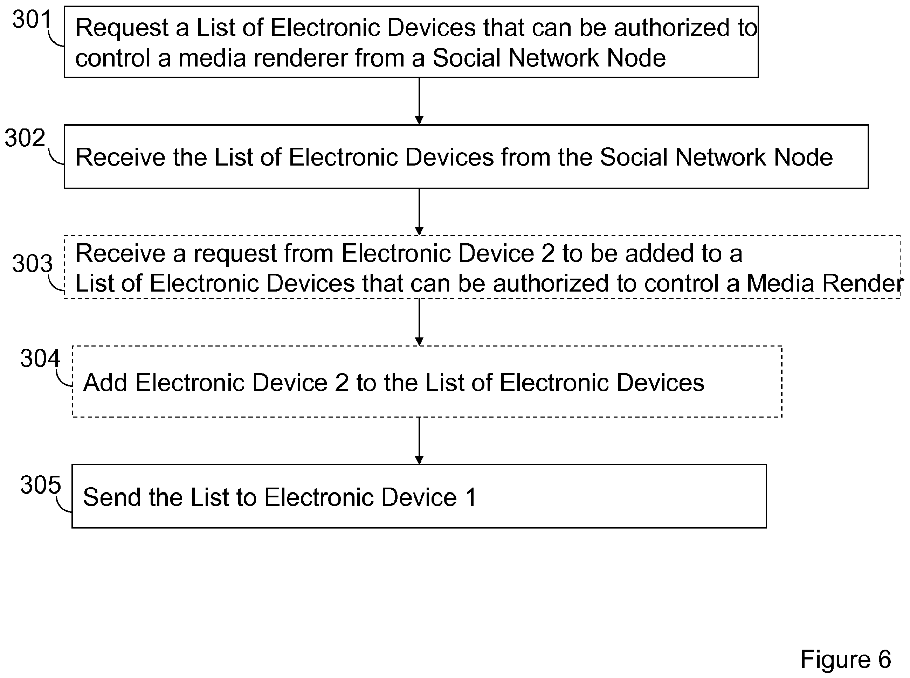

Figure 6 is a flow chart showing a procedure in the media aggregating node when accessing a list of sets of electronic devices. The list of sets of electronic devices, which may be associated with a user, can be authorized by the first electronic device to control the media rendering unit may be stored in the media aggregating node or it can be requested by the media aggregating node, e.g., from a social network node, step 301. In step 302 the media aggregating node receives the list, e.g. by interfacing with the list on the social network node through a set of APIs. In step 303, the media aggregating node receives a request from a second electronic device to be added to the list. The request may also include a request to add a set of second electronic devices, e.g. all electronic devices associated with a second user. In step 304, the media aggregating node adds the second electronic device(s) to the list. Next, in step 305, the media aggregating node forwards the list to the first electronic device, either automatically or triggered by an event, e.g. when the first electronic devices logs in on the media aggregating node or upon switch-on of the device.

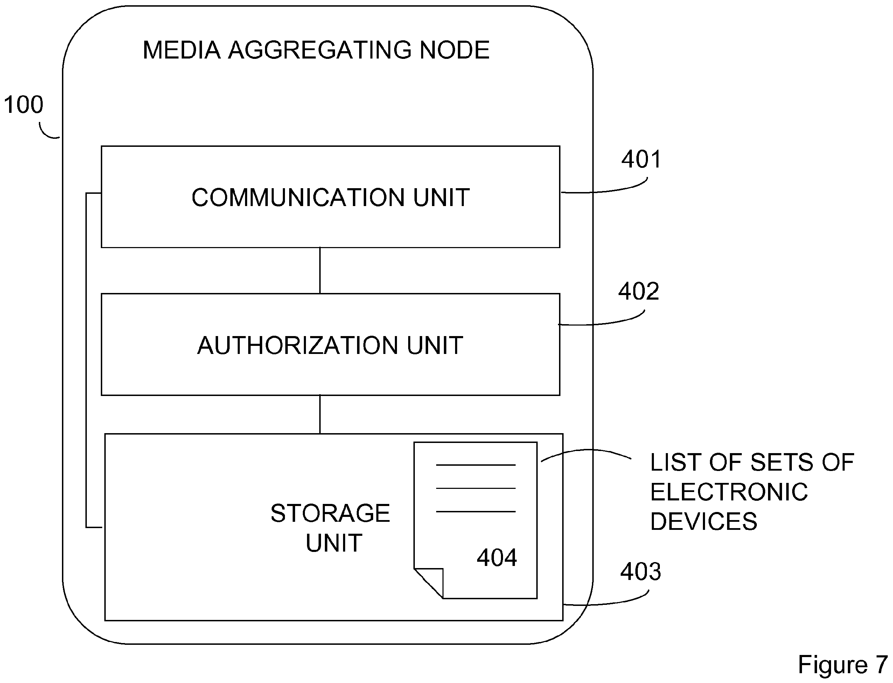

Figure 7 schematically illustrates an exemplary media aggregating node, according to exemplary embodiments, e.g. a media aggregator. The media aggregating node comprises servers responsible for authenticating users, for processing all requests and presence messages, for storing data and making the user profile available, and for handling media and device metadata to be displayed on an electronic device. The media aggregating node comprises a communication unit 401 for communication with the gateway, with electronic devices, and with social network nodes, said communication unit 401 comprises a sender and a receiver.

The receiver is configured to receive user login and presence information from electronic devices and presence information regarding media rendering units from the local network environment, e.g. via the gateway. The receiver is further configured to receive, from an electronic device, a user selection of a media rendering unit, media items, and user commands associated with rendering the selected media item upon the selected media rendering unit. The receiver is further configured to receive an instruction from a first electronic device to authorize a second electronic device or a set of second electronic devices associated with a second user to control a media rendering unit and the media rendering upon it. The receiver is also configured to receive, from a social network node e.g. through APIs, a list of sets of electronic devices that can be authorized by the first electronic device to control a media rendering unit, and to receive a request from an electronic device to add a set of second electronic devices to a list of electronic devices that can be authorized by the first electronic device to control a media rendering unit.

The sender is configured to send presence information regarding media rendering units and sets of second electronic devices to the first electronic device. The sender is also configured to send presence information, to the second electronic device, about the selected media rendering unit, and further to send information about media published by content provider to the second electronic device. The sender sends user commands associated with rendering media on the selected media rendering unit to the gateway. The sender can further be configured to substantially simultaneous send presence information regarding the selected media rendering unit to the first and second electronic device. Finally, the sender is configured to send a request to a social network node to receive a list of sets of electronic device that can be authorized by the first electronic device to control a media rendering unit.

The media aggregating node further comprises an authorization unit. The authorizing unit 402 is configured to authorize a second electronic device 102, or sets of second electronic device, which can be associated with a second user, to control the media rendering unit 105 upon receiving instructions from the first electronic device 101. The authorization unit may determine whether an electronic device or sets of electronic devices associated with a user are included in a list of sets of electronic devices that can be authorized by the first electronic device to control the media rendering unit. After an electronic devices have been authorized by the authorization unit it can control the media rendering unit and the associated media rendering upon it.

A media aggregating node according to a further exemplary embodiment is provided with a storage unit 403. The storage unit is configured to store a list of sets electronic devices 404, which can be can be authorized by the first electronic device 101 to control a media rendering unit 105. The list could have been retrieved from a social network node and stored in the storage unit or it could be proprietary of the media aggregating node.

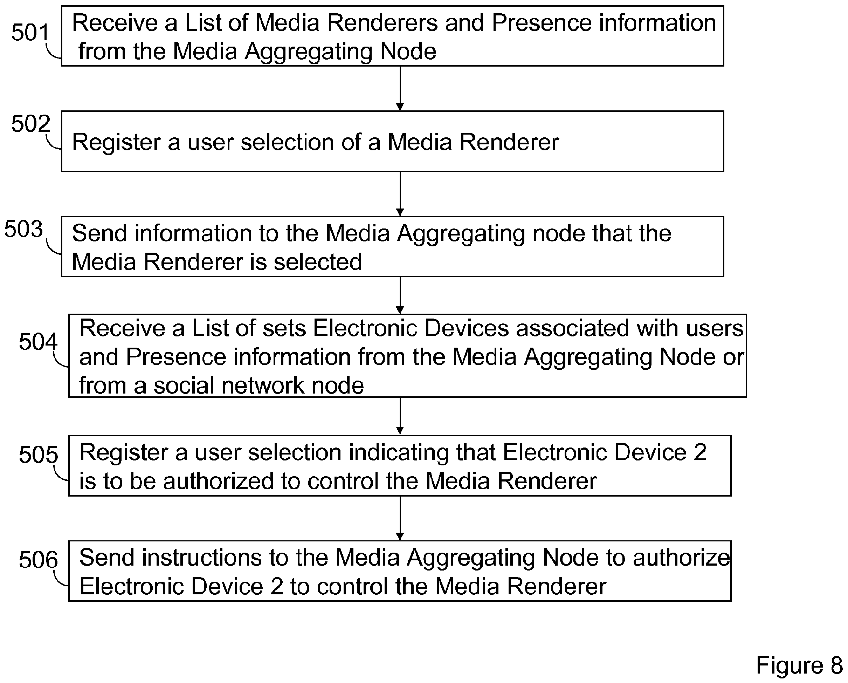

Figure 8 is a flow diagram showing a first electronic device authorizing a second electronic device to control a media rendering unit in a local network environment, e.g. a DLNA network, and the media rendering upon it.

The first electronic device sends login information to the media aggregating node. In step 501, the first electronic device receives, either upon a request or automatically, information regarding media rendering units, e.g. a list of media rendering units included in the local network environment that are available and suitable to render media items from the media aggregating node. The list of available media rendering units is displayed to the user of the first electronic device and the user then selects a media rendering unit using the first electronic device. In step 502 the user selection of a media rendering unit is registered by a user input unit 702, and thereafter the user selection is sent to the media aggregating node, step 503. Next, the first electronic device access a list of sets of second electronic devices associated with a second users, step 504, and the first user makes a selection of either a single second electronic device or a set of second electronic devices or a second user and all the second electronic devices associated with the second user to be authorized to control the media rendering unit, step 505. Thereafter, the first electronic device sends instructions to the media aggregating node to authorize the second electronic device or set of second electronic devices to control the media rendering unit, step 506.

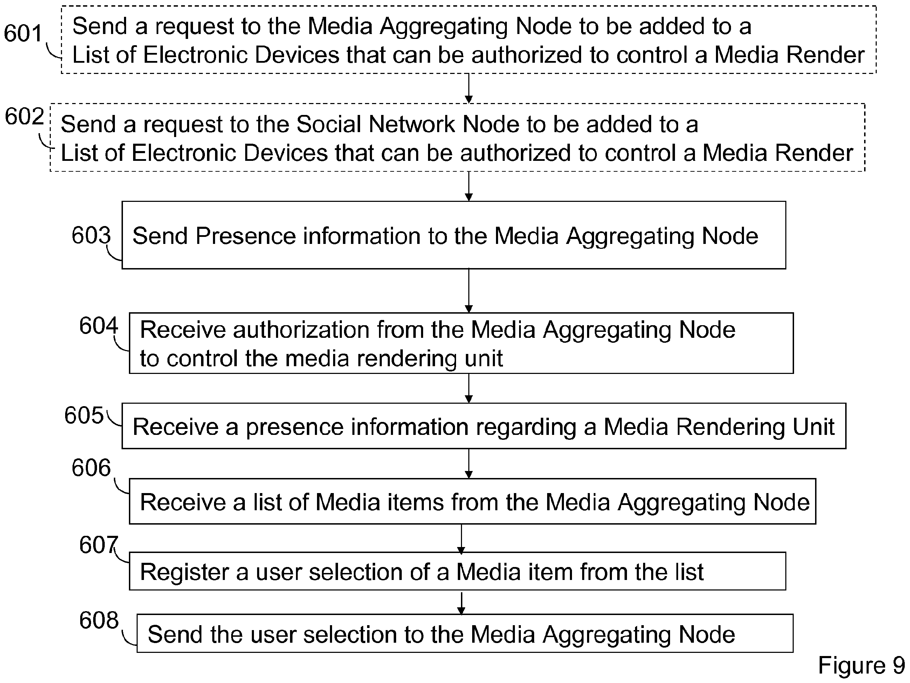

Figure 9 is a flow diagram showing a second electronic device being authorized by a first electronic device to control a media rendering unit and the media rendering upon it.

In step 601, the user of the second electronic device sends a request to the media aggregating node to be added or to add a set of second electronic device to a list of sets of electronic devices that can be authorized by a first electronic device to control a media rendering unit. The media aggregating node adds the second electronic device or the set of second electronic devices to list, which is either stored in the media aggregating node or on a social network node. Alternatively, the second electronic device can further send a request to be added, or to add a set of second electronic device, to a list of sets of electronic devices that can be authorized by a first electronic device to control a media rendering unit to a social network node, step 602. In step 603, the second electronic device logs in and/or sends presence information to the media aggregating node. In step 604, the second electronic device receives information from the media aggregating node that it is authorized to control a media rendering unit. The second electronic device receives presence information regarding the media rendering unit, step 605, and a list of media items, step 606, from the media aggregating node. The list of media items is displayed to the user of the second electronic device using, e.g., the display unit and, in step 607, the user selects a media item to be rendered on the media aggregating node and the second electronic device registers the user selection using a user input unit 702, e.g. a touch-screen unit. Thereafter, in step 608, information about the user selection of the media item is sent to the media aggregating node.

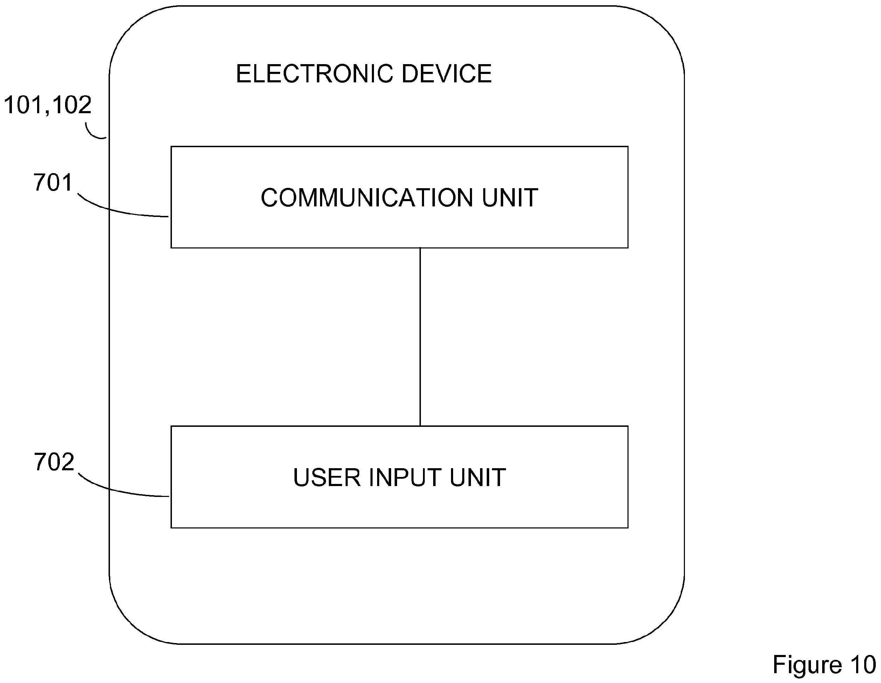

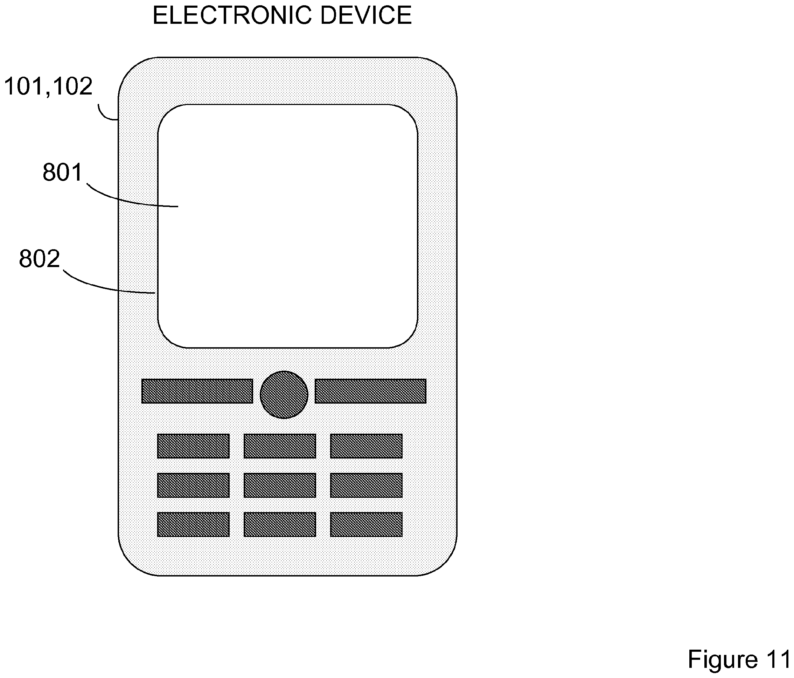

Figure 10 and 11 schematically illustrates exemplary electronic devices, first electronic devices 101 or second electronic devices 102, according to exemplary embodiments. The electronic device maybe e.g. a laptop, a mobile phone, a PDA (Personal digital assistant), or a tablet PC. The electronic device is adapted to communicate with the media aggregating node and external network environments, e.g. the internet. The electronic devices are provided with communication units 701 for communicating with the media aggregating node, the external network and the social network node.

For a first electronic device the communication unit further comprises a sender and a receiver. The receiver is arranged to receive presence information, from the media aggregating node, regarding media rendering units included the local network. The presence information can e.g. indicate which media rendering units that are available to render media, or various status indications, e.g. whether the media rendering unit is playing media items or temporary disconnected from the local network. The receiver is further arranged to receive, from the media aggregating node, presence information regarding second electronic devices or sets of second electronic devices, associated with a user, that can be authorized to control a media rendering unit. The receiver is further arranged to receive, from the media aggregating or from a social network node a list of second electronic devices or sets of second electronic device associated with a user that can be authorized to control a media rendering unit. The sender is arranged to send information regarding a user selection of a media rendering unit to the media aggregating node. The sender further is arranged to send instructions to the media aggregating node to authorize a second electronic device or a set of second electronic devices to control a media rendering unit. The display unit 801 of the first electronic device is configured to display information received from the media aggregating node and from the social network node, e.g. presence information, media items, lists of sets of electronic devices etc. The user input unit 702, e.g. a touch-screen unit 802, is configured to register a user selection of a media rendering unit, of a second electronic device or set of second electronic devices associated with a user, e.g., from a list of sets of electronic devices that can be authorized by the first electronic device to control a media rendering unit.

The second electronic device is provided with a communication unit 701 for communicating with the media aggregating node and with a social network node. The communication unit further comprises a sender and a receiver. The sender is arranged to send user login details and presence information to the media aggregating node so that the media aggregating node can authenticate and authorize the second electronic device to control a media rendering unit. The sender is further arranged to send a request to a media aggregating node or to a social network node to add the second electronic device or a set of second electronic devices associated with a user to a list comprising electronic devices or sets of electronic devices associated with a user that can be authorized by the first electronic device to control a media rendering unit. The sender is further arranged to send user selections of media items and user commands associated with handling media items upon the media rendering unit to the media aggregating node 100. The receiver is arranged to receive an authorization from a media aggregating node to control a media rendering unit. The receiver is further arranged to receive presence information, from a media aggregating node, regarding media rendering units included in the local network environment and information regarding media items. The second electronic device includes a display unit 801 for displaying information about media items published by the media aggregating node, media rendering units presence information, and a user interface, which may be adapted to the user interface of the selected media rendering unit. The second electronic device is further provided with a user input unit 702 configured to register user selections of media items or user input commands, e.g. user commands associated with controlling media on the media rendering unit such as selecting a media item or command associated with media rendering such as play, stop, resume playing, fast forward, rewind. The user input unit may e.g. be a touch-screen unit, soft keys, hard keys, push-buttons, sensors for user gesture detection etc.

It should be noted that the above-mentioned embodiments illustrate rather than limit the invention, and that those skilled in the art will be able to modify the above embodiments without departing from the scope of the appended claims. The word "comprising" does not exclude the presence of elements or steps other than those listed in a claim, "a" or "an" does not exclude a plurality, and a single processor or other unit may fulfill the functions of several units recited in the claims. Any reference signs in the claims shall not be construed so as to limit their scope.

## Claims

1. A method in a media aggregating node (100), connected to a local network environment (103) and to a first electronic device (101) and to a set of second electronic devices comprising at least one second electronic device (102), for authorizing the at least one second electronic device (102) to control a media rendering unit (105) and the media rendering upon it, said media rendering unit (105) being comprised in the local network environment (103) and controllable from the first electronic device (101), the method comprising:
- sending (S4, 201) presence information regarding a at least one media rendering unit (105) to the first electronic device (101);
- receiving (203), from the first electronic device (101), a user selection of the at least one media rendering unit (105);
- receiving (204), from the first electronic device (101), an instruction to authorize the at least one second electronic device (102) to control the at least one media rendering unit (105);
- authorizing (205) the at least one second electronic device (102) to control the at least one media rendering unit (105); wherein the at least one media rendering unit (105) and the media rendering upon it can be controlled using instructions received from the at least one second electronic device (102).

2. A method according to claim 1, wherein the media aggregating node (100) is further connected to a social network node (108) comprising a list of sets of electronic devices (109) that can be authorized by the first electronic (101) device to control the media rendering unit (105) wherein the method further comprises:
- requesting (301) the list of sets of electronic device (109) from the social network node (108);
- receiving (302) the list of sets of electronic device (109) from the social network node (108).

3. A method according to claim 1 or 2 further comprising:
- receiving (303) from the at least one second electronic device (102) a request to add the set of second electronic devices to a list of sets of electronic devices (109, 404), which can be authorized by the first electronic device (101) to control a media rendering unit (105) and the media rendering upon it;
- adding (304) the set of second electronic device (102) to said list of sets of electronic devices.

4. A method according to any of claims 1 to 3, further comprising:
- sending (S4) presence information regarding the at least one second electronic device (102) to the first electronic device (101), wherein the first electronic device (101) is able to authorize the at least one second electronic device (102) to control the at the least one media rendering unit (105).

5. A method in a first electronic device (101), connected to a media aggregating node (100) that is connected to a local network environment (103) and to a set of second electronic devices comprising at least one second electronic device (102), for authorizing the at least one second electronic device (102) to control a media rendering unit (105) and the media rendering upon it, said media rendering unit (105) being comprised in the local network environment (103) and controllable from the first electronic device (101), the method comprising:
- receiving (501), from the media aggregating node (100), presence information regarding the at least one media rendering unit (105);
- registering (502) a user selection of the at least one media rendering unit (105);
- sending (503) information to the media aggregating node (100) about the selection of the at least one media rendering unit (105);
- sending (506) instructions to the media aggregating node (100) to authorize the at least one second electronic device (102) to control the at least one media rendering unit (105) and the media rendering upon it.

6. A method in a first electronic device (101) according to claim 5, further comprising:
- receiving (S4), from the media aggregating node (100), presence information regarding at least one second electronic device (102), wherein the first electronic device (101) is able to authorize said at least one second electronic device (102) to control the at the least one media rendering unit (105) and media rendering upon it.

7. A method in a second electronic device (102), connected to a media aggregating node (100) connected to a local network environment (103) and to a first electronic device (101), for authorizing the second electronic device (102) to control a media rendering unit (105) and the media rendering upon it, wherein said media rendering unit (105) is comprised in the local network environment and controlled by the first electronic device (101), the method comprising:
- sending (603) presence information to the media aggregating node (100), wherein the first electronic device (101) is able to authorize the second electronic device (102) to control a media rendering unit (105) and the media rendering upon it;
- receiving (604) authorization, from the media aggregating node (100), to control the media rendering unit (105).

8. A method in a second electronic device (102) according to claim 7, wherein the second electronic device is further connected to a social network node, the mode further comprising:
- sending (602) a request to the social network node (108) to add a set of second electronic devices comprising at least one second electronic device to a list of sets of electronic devices (109), which can be authorized by the first electronic device (101) to control a media rendering unit (105).

9. A media aggregating node (100) connectable to a local network environment (103) and to a first electronic device (101) and to a to a set of second electronic devices comprising at least one second electronic device (102), arranged to authorize the at least one second electronic device (102) to control a media rendering unit (105) and the media rendering upon it, said media rendering unit (105) being comprised in the local network environment (103) and controllable by the first electronic device (101), the media aggregating node (100) comprising:
- a communication unit (401) configured to:
send presence information regarding the media rendering unit (105) to the first electronic device (101);
receive a user-selection of the media rendering unit (105) from the first electronic device (101);
receive an instruction, from the first electronic device (101), to authorize the at least one second electronic device (102) to control the media rendering unit (105); and
- an authorizing unit (402), configured to authorize the at least one second electronic device (102), upon instructions from the first electronic device (101), to control the media rendering unit (105).

10. A media aggregating node (100) according to claim 9, wherein the media aggregating node is further connectable to a social network node (108) comprising a list of sets of electronic devices, which can be authorized by the first electronic device to control the media rendering unit (105) and the media rendering upon it and wherein the communication unit (401) is further adapted to:
- send a request for the list of sets of electronic devices to the social network node (108);
- receive the list of sets of electronic devices from the social network node (108).

11. A media aggregating node (100) according to claim 9, further comprising:
- a storage unit (403) configured to store a list of sets of electronic devices (404), which can be can be authorized by the first electronic device (101) to control a media rendering unit (105).

12. A first electronic device (101), connectable to a media aggregating node (100) connectable to a local network environment (103) and to a to a set of second electronic devices comprising at least one second electronic device (102), arranged to authorize the at least one second electronic device (102) to control a media rendering unit (105) and the media rendering upon it, said media rendering unit (105) being comprised in the local network environment and controllable by the first electronic device (101), the first electronic device (101) comprising:
- a communication unit (701) configured to:
- receive, from the media aggregating node, presence information regarding the media rendering unit (105);
- send instructions to the media aggregating node (100) to authorize the at least one second electronic device (102) to control the media rendering unit (105);
- a user input unit (702) configured to:
- register a user command indicating that the at least one second electronic is selected to be authorized to control the media rendering unit (105).

13. A first electronic device (101) as claimed in claim 12, wherein the communication unit (701) is further adapted to:
- receive, from the media aggregating node (100), presence information regarding at least one second electronic device (102);

14. A second electronic device (102), connectable to a media aggregating node (100) connectable to a local network environment (103) and to a first electronic device (101), arranged to be authorized to control a media rendering unit (105) and the media rendering upon it, said media rendering unit (105) being comprised in the local network environment and controllable by the first electronic device (101), the second electronic device (102) comprising:
- a communication unit (701) configured to:
send presence information to the media aggregating node, wherein the first electronic device (101) is able to authorize the second electronic device (102) to control the media rendering unit (105);
send user commands, to the media aggregating node (100), associated with controlling the media rendering unit (105) and the media rendering upon it.
- a user input unit (702) configured to:
- register user commands associated with controlling the media rendering unit (105) and the media rendering upon it.

15. A second electronic device (102) according to claim 14, wherein the communication unit (701) is further adapted to
- receive an authorization, from the media aggregating node, to control the media rendering unit (105).

## Patentansprüche

1. Verfahren in einem Medienaggregationsknoten (100), der mit einer lokalen Netzumgebung (103) und einer ersten elektronischen Vorrichtung (101) und einem Satz zweiter elektronischer Vorrichtungen verbunden ist, der mindestens eine zweite elektronische Vorrichtung (102) umfasst, zum Autorisieren der mindestens einen zweiten elektronischen Vorrichtung (102) zum Steuern einer Mediendarstellungseinheit (105) und der Mediendarstellung darauf, wobei die Mediendarstellungseinheit (105) in der lokalen Netzumgebung (103) umfasst ist und von der ersten elektronischen Vorrichtung (101) steuerbar ist, wobei das Verfahren Folgendes umfasst:
- Senden (S4, 201) von Präsenzinformationen in Bezug auf mindestens eine Mediendarstellungseinheit (105) an die erste elektronische Vorrichtung (101);
- Empfangen (203) einer Benutzerauswahl der mindestens einen Mediendarstellungseinheit (105) von der ersten elektronischen Vorrichtung (101);
- Empfangen (204) einer Anweisung zum Autorisieren der mindestens einen zweiten elektronischen Vorrichtung (102) zum Steuern der mindestens einen Mediendarstellungseinheit (105) von der ersten elektronischen Vorrichtung (101);
- Autorisieren (205) der mindestens einen zweiten elektronischen Vorrichtung (102) zum Steuern der mindestens einen Mediendarstellungseinheit (105); wobei die mindestens eine Mediendarstellungseinheit (105) und die Mediendarstellung darauf unter Verwendung von Anweisungen gesteuert werden können, die von der mindestens einen zweiten elektronischen Vorrichtung (102) empfangen werden.

2. Verfahren nach Anspruch 1, wobei der Medienaggregationsknoten (100) ferner mit einem sozialen Netzknoten (108) verbunden ist, der eine Liste von Sätzen elektronischer Vorrichtungen (109) umfasst, die von der ersten elektronischen Vorrichtung (101) autorisiert werden können, die Mediendarstellungseinheit (105) zu steuern, wobei das Verfahren ferner Folgendes umfasst:
- Anfordern (301) der Liste von Sätzen elektronischer Vorrichtungen (109) von dem sozialen Netzknoten (108);
- Empfangen (302) der Liste von Sätzen elektronischer Vorrichtungen (109) von dem sozialen Netzknoten (108).

3. Verfahren nach Anspruch 1 oder 2, ferner umfassend:
- Empfangen (303) einer Anforderung von der mindestens einen zweiten elektronischen Vorrichtung (102) zum Hinzufügen des Satzes zweiter elektronischer Vorrichtungen zu einer Liste von Sätzen elektronischer Vorrichtungen (109, 404), die durch die erste elektronische Vorrichtung (101) autorisiert werden können, eine Mediendarstellungseinheit (105) und die Mediendarstellung darauf zu steuern;
- Hinzufügen (304) des Satzes zweiter elektronischer Vorrichtung (102) zu der Liste von Sätzen elektronischer Vorrichtungen.

4. Verfahren nach einem der Ansprüche 1 bis 3, ferner umfassend:
- Senden (S4) von Präsenzinformationen in Bezug auf die mindestens eine zweite elektronische Vorrichtung (102) an die erste elektronische Vorrichtung (101), wobei die erste elektronische Vorrichtung (101) in der Lage ist, die mindestens eine zweite elektronische Vorrichtung (102) zu autorisieren, die mindestens eine Mediendarstellungseinheit (105) zu steuern.

5. Verfahren in einer ersten elektronischen Vorrichtung (101), die mit einem Medienaggregationsknoten (100) verbunden ist, der mit einer lokalen Netzumgebung (103) und einem Satz zweiter elektronischer Vorrichtungen verbunden ist, der mindestens eine zweite elektronische Vorrichtung (102) umfasst, zum Autorisieren der mindestens einen zweiten elektronischen Vorrichtung (102) zum Steuern einer Mediendarstellungseinheit (105) und der Mediendarstellung darauf, wobei die Mediendarstellungseinheit (105) in der lokalen Netzumgebung (103) umfasst ist und von der ersten elektronischen Vorrichtung (101) steuerbar ist, wobei das Verfahren Folgendes umfasst:
- Empfangen (501) von Präsenzinformationen in Bezug auf die mindestens eine Mediendarstellungseinheit (105) von dem Medienaggregationsknoten (100);
- Registrieren (502) einer Benutzerauswahl der mindestens einen Mediendarstellungseinheit (105);
- Senden (503) von Informationen an den Medienaggregationsknoten (100) über die Auswahl der mindestens einen Mediendarstellungseinheit (105);
- Senden (506) von Anweisungen an den Medienaggregationsknoten (100), um die mindestens eine zweite elektronische Vorrichtung (102) zu autorisieren, die mindestens eine Mediendarstellungseinheit (105) und die Mediendarstellung darauf zu steuern.

6. Verfahren in einer ersten elektronischen Vorrichtung (101) nach Anspruch 5, ferner umfassend:
- Empfangen (S4) von Präsenzinformationen in Bezug auf mindestens eine zweite elektronische Vorrichtung (102) von dem Medienaggregationsknoten (100), wobei die erste elektronische Vorrichtung (101) in der Lage ist, die mindestens eine zweite elektronische Vorrichtung (102) zu autorisieren, die mindestens eine Mediendarstellungseinheit (105) und die Mediendarstellung darauf zu steuern.

7. Verfahren in einer zweiten elektronischen Vorrichtung (102), die mit einem Medienaggregationsknoten (100) verbunden ist, der mit einer lokalen Netzumgebung (103) und einer ersten elektronischen Vorrichtung (101) verbunden ist, zum Autorisieren der zweiten elektronischen Vorrichtung (102) zum Steuern einer Mediendarstellungseinheit (105) und der Mediendarstellung darauf, wobei die Mediendarstellungseinheit (105) in der lokalen Netzumgebung umfasst ist und durch die erste elektronische Vorrichtung (101) steuerbar ist, wobei das Verfahren Folgendes umfasst:
- Senden (603) von Präsenzinformationen an den Medienaggregationsknoten (100), wobei die erste elektronische Vorrichtung (101) in der Lage ist, die zweite elektronische Vorrichtung (102) zu autorisieren, eine Mediendarstellungseinheit (105) und die Mediendarstellung darauf zu steuern;
- Empfangen (604) einer Autorisierung von dem Medienaggregationsknoten (100), um die Mediendarstellungseinheit (105) zu steuern.

8. Verfahren in einer zweiten elektronischen Vorrichtung (102) nach Anspruch 7, wobei die zweite elektronische Vorrichtung ferner mit einem sozialen Netzknoten verbunden ist, wobei der Modus ferner Folgendes umfasst:
- Senden (602) einer Anforderung an den sozialen Netzknoten (108) zum Hinzufügen eines Satzes zweiter elektronischer Vorrichtungen, der mindestens eine zweite elektronische Vorrichtung umfasst, zu einer Liste von Sätzen elektronischer Vorrichtungen (109), die durch die erste elektronische Vorrichtung (101) autorisiert werden können, eine Mediendarstellungseinheit (105) zu steuern.

9. Medienaggregationsknoten (100), der mit einer lokalen Netzumgebung (103) und einer ersten elektronischen Vorrichtung (101) und einem einem Satz zweiter elektronischer Vorrichtungen, der mindestens eine zweite elektronische Vorrichtung (102) umfasst, verbunden werden kann, der dazu angeordnet ist, die mindestens eine zweite elektronische Vorrichtung (102) zu autorisieren, eine Mediendarstellungseinheit (105) und die Mediendarstellung darauf zu steuern, wobei die Mediendarstellungseinheit (105) in der lokalen Netzumgebung (103) umfasst ist und durch die erste elektronische Vorrichtung (101) steuerbar ist, wobei der Medienaggregationsknoten (100) Folgendes umfasst:
- eine Kommunikationseinheit (401), die dazu konfiguriert ist:
Präsenzinformationen in Bezug auf die Mediendarstellungseinheit (105) an die erste elektronische Vorrichtung (101) zu senden;
eine Benutzerauswahl der Mediendarstellungseinheit (105) von der ersten elektronischen Vorrichtung (101) zu empfangen;
eine Anweisung von der ersten elektronischen Vorrichtung (101) zum Autorisieren der mindestens einen zweiten elektronischen Vorrichtung (102) zu empfangen, um die Mediendarstellungseinheit (105) zu steuern; und
- eine Autorisierungseinheit (402), die dazu konfiguriert ist, die mindestens eine zweite elektronische Vorrichtung (102) auf Anweisungen von der ersten elektronischen Vorrichtung (101) hin zu autorisieren, die Mediendarstellungseinheit (105) zu steuern.

10. Medienaggregationsknoten (100) nach Anspruch 9, wobei der Medienaggregationsknoten ferner mit einem sozialen Netzknoten (108) verbunden werden kann, der eine Liste von Sätzen elektronischer Vorrichtungen umfasst, die von der ersten elektronischen Vorrichtung autorisiert werden können, die Mediendarstellungseinheit (105) und die Mediendarstellung darauf zu steuern, und wobei die Kommunikationseinheit (401) ferner dazu angepasst ist:
- eine Anforderung für die Liste von Sätzen elektronischer Vorrichtungen an den sozialen Netzknoten (108) zu senden;
- die Liste von Sätzen elektronischer Vorrichtungen von dem sozialen Netzknoten (108) zu empfangen.

11. Medienaggregationsknoten (100) nach Anspruch 9, ferner umfassend:
- eine Speichereinheit (403), die dazu konfiguriert ist, eine Liste von Sätzen elektronischer Vorrichtungen (404) zu speichern, die durch die erste elektronische Vorrichtung (101) autorisiert werden können können, eine Mediendarstellungseinheit (105) zu steuern.

12. Erste elektronische Vorrichtung (101), die mit einem Medienaggregationsknoten (100) verbunden werden kann, der mit einer lokalen Netzumgebung (103) und einem einem Satz zweiter elektronischer Vorrichtungen, der mindestens eine zweite elektronische Vorrichtung (102) umfasst, verbunden werden kann, die dazu angeordnet ist, die mindestens eine zweite elektronische Vorrichtung (102) zu autorisieren, eine Mediendarstellungseinheit (105) und die Mediendarstellung darauf zu steuern, wobei die Mediendarstellungseinheit (105) in der lokalen Netzumgebung umfasst ist und durch die erste elektronische Vorrichtung (101) steuerbar ist, wobei die erste elektronische Vorrichtung (101) Folgendes umfasst:
- eine Kommunikationseinheit (701), die dazu konfiguriert ist:
- von dem Medienaggregationsknoten Präsenzinformationen in Bezug auf die Mediendarstellungseinheit (105) zu empfangen;
- Anweisungen an den Medienaggregationsknoten (100) zu senden, um die mindestens eine zweite elektronische Vorrichtung (102) zu autorisieren, die Mediendarstellungseinheit (105) zu steuern;
- eine Benutzereingabeeinheit (702), die dazu konfiguriert ist:
- einen Benutzerbefehl zu registrieren, der angibt, dass die mindestens eine zweite elektronische ausgewählt ist, um autorisiert zu werden, die Mediendarstellungseinheit (105) zu steuern.

13. Erste elektronische Vorrichtung (101) nach Anspruch 12, wobei die Kommunikationseinheit (701) ferner dazu angepasst ist:
- von dem Medienaggregationsknoten (100) Präsenzinformationen in Bezug auf mindestens eine zweite elektronische Vorrichtung (102) zu empfangen;

14. Zweite elektronische Vorrichtung (102), die mit einem Medienaggregationsknoten (100) verbunden werden kann, der mit einer lokalen Netzumgebung (103) und einer ersten elektronischen Vorrichtung (101) verbunden werden kann, die dazu angeordnet ist, autorisiert zu werden, eine Mediendarstellungseinheit (105) und die Mediendarstellung darauf zu steuern, wobei die Mediendarstellungseinheit (105) in der lokalen Netzumgebung umfasst ist und durch die erste elektronische Vorrichtung (101) steuerbar ist, wobei die zweite elektronische Vorrichtung (102) Folgendes umfasst:
- eine Kommunikationseinheit (701), die dazu konfiguriert ist:
Präsenzinformationen an den Medienaggregationsknoten zu senden, wobei die erste elektronische Vorrichtung (101) in der Lage ist, die zweite elektronische Vorrichtung (102) zu autorisieren, die Mediendarstellungseinheit (105) zu steuern;
Benutzerbefehle an den Medienaggregationsknoten (100) zu senden, die mit dem Steuern der Mediendarstellungseinheit (105) und der Mediendarstellung darauf in Zusammenhang stehen.
- eine Benutzereingabeeinheit (702), die dazu konfiguriert ist:
- Benutzerbefehle zu registrieren, die mit dem Steuern der Mediendarstellungseinheit (105) und der Mediendarstellung darauf in Zusammenhang stehen.

15. Zweite elektronische Vorrichtung (102) nach Anspruch 14, wobei die Kommunikationseinheit (701) ferner dazu angepasst ist:
- eine Autorisierung von dem Medienaggregationsknoten zu empfangen, um die Mediendarstellungseinheit (105) zu steuern.

## Revendications

1. Procédé dans un noeud d'agrégation multimédia (100), connecté à un environnement de réseau local (103) et à un premier dispositif électronique (101) et à un ensemble de deuxièmes dispositifs électroniques comprenant au moins un deuxième dispositif électronique (102), pour autoriser l'au moins un deuxième dispositif électronique (102) à commander une unité de rendu multimédia (105) et le rendu multimédia sur celle-ci, ladite unité de rendu multimédia (105) étant comprise dans l'environnement de réseau local (103) et pouvant être commandée à partir du premier dispositif électronique (101), le procédé comprenant :
- l'envoi (S4, 201) d'informations de présence concernant au moins une unité de rendu multimédia (105) au premier dispositif électronique (101) ;
- la réception (203), depuis le premier dispositif électronique (101), d'une sélection par un utilisateur de l'au moins une unité de rendu multimédia (105) ;
- la réception (204), depuis le premier dispositif électronique (101), d'une instruction pour autoriser l'au moins un deuxième dispositif électronique (102) à commander l'au moins une unité de rendu multimédia (105) ;
- l'autorisation (205) de l'au moins un deuxième dispositif électronique (102) pour commander l'au moins une unité de rendu multimédia (105) ; dans lequel l'au moins une unité de rendu multimédia (105) et le rendu multimédia sur celle-ci peuvent être commandés en utilisant des instructions reçues de l'au moins un deuxième dispositif électronique (102).

2. Procédé selon la revendication 1, dans lequel le noeud d'agrégation multimédia (100) est en outre connecté à un noeud de réseau social (108) comprenant une liste d'ensembles de dispositifs électroniques (109) qui peuvent être autorisés par le premier dispositif électronique (101) à commander l'unité de rendu multimédia (105) dans lequel le procédé comprend en outre :
- la demande (301) de la liste d'ensembles de dispositifs électroniques (109) auprès du noeud de réseau social (108) ;
- la réception (302) de la liste d'ensembles de dispositifs électroniques (109) depuis le noeud de réseau social (108).

3. Procédé selon la revendication 1 ou 2 comprenant en outre :
- la réception (303) depuis l'au moins un deuxième dispositif électronique (102) d'une demande pour ajouter l'ensemble de deuxièmes dispositifs électroniques à une liste d'ensembles de dispositifs électroniques (109, 404), qui peuvent être autorisés par le premier dispositif électronique (101) à commander une unité de rendu multimédia (105) et le rendu multimédia sur celle-ci ;
- ajouter (304) l'ensemble de deuxième dispositif électronique (102) à ladite liste d'ensembles de dispositifs électroniques.

4. Procédé selon l'une quelconque des revendications 1 à 3, comprenant en outre :
- l'envoi (S4) d'informations de présence concernant l'au moins un deuxième dispositif électronique (102) au premier dispositif électronique (101), dans lequel le premier dispositif électronique (101) est capable d'autoriser l'au moins un deuxième dispositif électronique (102) à commander l'au moins une unité de rendu multimédia (105).

5. Procédé dans un premier dispositif électronique (101), connecté à un noeud d'agrégation multimédia (100) qui est connecté à un environnement de réseau local (103) et à un ensemble de deuxièmes dispositifs électroniques comprenant au moins un deuxième dispositif électronique (102), pour autoriser l'au moins un deuxième dispositif électronique (102) à commander une unité de rendu multimédia (105) et le rendu multimédia sur celle-ci, ladite unité de rendu multimédia (105) étant comprise dans l'environnement de réseau local (103) et pouvant être commandée à partir du premier dispositif électronique (101), le procédé comprenant :
- la réception (501), depuis le noeud d'agrégation multimédia (100), d'informations de présence concernant l'au moins une unité de rendu multimédia (105) ;
- l'enregistrement (502) d'une sélection par un utilisateur de l'au moins une unité de rendu multimédia (105) ;
- l'envoi (503) d'informations au noeud d'agrégation multimédia (100) à propos de la sélection de l'au moins une unité de rendu multimédia (105) ;
- l'envoi (506) d'instructions au noeud d'agrégation multimédia (100) pour autoriser l'au moins un deuxième dispositif électronique (102) à commander l'au moins une unité de rendu multimédia (105) et le rendu multimédia sur celle-ci.

6. Procédé dans un premier dispositif électronique (101) selon la revendication 5, comprenant en outre :
- la réception (S4), depuis le noeud d'agrégation multimédia (100), d'informations de présence concernant au moins un deuxième dispositif électronique (102), dans lequel le premier dispositif électronique (101) est capable d'autoriser ledit au moins un deuxième dispositif électronique (102) à commander l'au moins une unité de rendu multimédia (105) et le rendu multimédia sur celle-ci.

7. Procédé dans un deuxième dispositif électronique (102), connecté à un noeud d'agrégation multimédia (100) connecté à un environnement de réseau local (103) et à un premier dispositif électronique (101), pour autoriser le deuxième dispositif électronique (102) à commander une unité de rendu multimédia (105) et le rendu multimédia sur celle-ci, dans lequel ladite unité de rendu multimédia (105) est comprise dans l'environnement de réseau local et commandée par le premier dispositif électronique (101), le procédé comprenant :
- l'envoi (603) d'informations de présence au noeud d'agrégation multimédia (100), dans lequel le premier dispositif électronique (101) est capable d'autoriser le deuxième dispositif électronique (102) à commander une unité de rendu multimédia (105) et le rendu multimédia sur celle-ci ;
- la réception (604) d'une autorisation, depuis le noeud d'agrégation multimédia (100), pour commander l'unité de rendu multimédia (105).

8. Procédé dans un deuxième dispositif électronique (102) selon la revendication 7, dans lequel le deuxième dispositif électronique est en outre connecté à un noeud de réseau social, le mode comprenant en outre :
- l'envoi (602) d'une demande au noeud de réseau social (108) pour ajouter un ensemble de deuxièmes dispositifs électroniques comprenant au moins un deuxième dispositif électronique à une liste d'ensembles de dispositifs électroniques (109), qui peuvent être autorisés par le premier dispositif électronique (101) à commander une unité de rendu multimédia (105).

9. Noeud d'agrégation multimédia (100) pouvant être connecté à un environnement de réseau local (103) et à un premier dispositif électronique (101) et à un à un ensemble de deuxièmes dispositifs électroniques comprenant au moins un deuxième dispositif électronique (102), agencés pour autoriser l'au moins un deuxième dispositif électronique (102) à commander une unité de rendu multimédia (105) et le rendu multimédia sur celle-ci, ladite unité de rendu multimédia (105) étant comprise dans l'environnement de réseau local (103) et pouvant être commandée par le premier dispositif électronique (101), le noeud d'agrégation multimédia (100) comprenant :
- une unité de communication (401) configurée pour :
envoyer des informations de présence concernant l'unité de rendu multimédia (105) au premier dispositif électronique (101) ;
recevoir une sélection par un utilisateur de l'unité de rendu multimédia (105) depuis le premier dispositif électronique (101) ;
recevoir une instruction, depuis le premier dispositif électronique (101), pour autoriser l'au moins un deuxième dispositif électronique (102) à commander l'unité de rendu multimédia (105) ; et
- une unité d'autorisation (402), configurée pour autoriser l'au moins un deuxième dispositif électronique (102), sur instructions du premier dispositif électronique (101), à commander l'unité de rendu multimédia (105).

10. Noeud d'agrégation multimédia (100) selon la revendication 9, dans lequel le noeud d'agrégation multimédia peut en outre être connecté à un noeud de réseau social (108) comprenant une liste d'ensembles de dispositifs électroniques, qui peuvent être autorisés par le premier dispositif électronique à commander l'unité de rendu multimédia (105) et le rendu multimédia sur celle-ci et dans lequel l'unité de communication (401) est conçue en outre pour :
- envoyer une demande pour la liste d'ensembles de dispositifs électroniques au noeud de réseau social (108) ;
- recevoir la liste d'ensembles de dispositifs électroniques depuis le noeud de réseau social (108).

11. Noeud d'agrégation multimédia (100) selon la revendication 9, comprenant en outre :
- une unité de stockage (403) configurée pour stocker une liste d'ensembles de dispositifs électroniques (404), qui peuvent être peuvent être autorisés par le premier dispositif électronique (101) à commander une unité de rendu multimédia (105).

12. Premier dispositif électronique (101), pouvant être connecté à un noeud d'agrégation multimédia (100) pouvant être connecté à un environnement de réseau local (103) et à un à un ensemble de deuxièmes dispositifs électroniques comprenant au moins un deuxième dispositif électronique (102), agencé pour autoriser l'au moins un deuxième dispositif électronique (102) à commander une unité de rendu multimédia (105) et le rendu multimédia sur celle-ci, ladite unité de rendu multimédia (105) étant comprise dans l'environnement de réseau local et pouvant être commandée par le premier dispositif électronique (101), le premier dispositif électronique (101) comprenant :
- une unité de communication (701) configurée pour :
- recevoir, depuis le noeud d'agrégation multimédia, des informations de présence concernant l'unité de rendu multimédia (105) ;
- envoyer des instructions au noeud d'agrégation multimédia (100) pour autoriser l'au moins un deuxième dispositif électronique (102) à commander l'unité de rendu multimédia (105) ;
- une unité d'entrée utilisateur (702) configurée pour :
- enregistrer une commande d'un utilisateur indiquant que l'au moins un deuxième électronique est sélectionné pour être autorisé à commander l'unité de rendu multimédia (105).

13. Premier dispositif électronique (101) selon la revendication 12, dans lequel l'unité de communication (701) est conçue en outre pour :
- recevoir, depuis le noeud d'agrégation multimédia (100), des informations de présence concernant au moins un deuxième dispositif électronique (102) ;

14. Deuxième dispositif électronique (102), pouvant être connecté à un noeud d'agrégation multimédia (100) pouvant être connecté à un environnement de réseau local (103) et à un premier dispositif électronique (101), agencé pour être autorisé à commander une unité de rendu multimédia (105) et le rendu multimédia sur celle-ci, ladite unité de rendu multimédia (105) étant comprise dans l'environnement de réseau local et pouvant être commandée par le premier dispositif électronique (101), le deuxième dispositif électronique (102) comprenant :
- une unité de communication (701) configurée pour :
envoyer des informations de présence au noeud d'agrégation multimédia, dans lequel le premier dispositif électronique (101) est capable d'autoriser le deuxième dispositif électronique (102) à commander l'unité de rendu multimédia (105) ;
envoyer des commandes d'utilisateur, au noeud d'agrégation multimédia (100), associée à la commande de l'unité de rendu multimédia (105) et du rendu multimédia sur celle-ci.
- une unité d'entrée utilisateur (702) configurée pour :
- enregistrer des commandes d'utilisateur associées à la commande de l'unité de rendu multimédia (105) et du rendu multimédia sur celle-ci.

15. Deuxième dispositif électronique (102) selon la revendication 14, dans lequel l'unité de communication (701) est conçue en outre pour
- recevoir une autorisation, depuis le noeud d'agrégation multimédia, pour commander l'unité de rendu multimédia (105).
